# EUROPEAN PATENT APPLICATION

(11) **EP 1 995 504 A1**
(43) Date of publication of application: **26.11.2008**
(21) Application number: 07715285.8
(22) Date of filing: 07.03.2007
(51) Int. Cl.: F16L 19/08, F16L 21/08, F25B 41/00

(54) **PIPE FITTING**

(30) Priority: 10.03.2006 JP 2006066173
(71) Applicant: DAIKIN INDUSTRIES, LTD., Osaka-shi, Osaka 530-8323 (JP)
(72) Inventor: NAKATA, Haruo, Sakai-shi, Osaka 591-8511 (JP)
(74) Representative: HOFFMANN EITLE
(86) International application number: PCT/JP2007/054483
(87) International publication number: WO 2007/105574

(57) **Abstract**

There is provided a pipe fitting in which loss of a sleeve is prevented, and the sealing performance of a joint portion is ensured while enhancing the workability at the time of connecting pipes. Also, a refrigerating apparatus and the like using the pipe fitting are provided. A sleeve (15) is provided integrally with a nut (14) before joining of a pipe, and cut off and separated from the nut (14) by screwing of the nut (14) into a fitting body. Moreover, an inner circumferential surface (15d) of the sleeve (15) is formed with a recess portion (15g). Thus, when the sleeve (15) bites into a pipe (12), deformation of a contact surface (15c) is induced so that a contact area Al of a contact portion between the contact surface (15c) and a guide surface (13d) is increased by a pressing force from an inner surface (14c) of the nut (14).

## Description

### TECHNICAL FIELD

The present invention relates to a pipe fitting for joining a refrigerant pipe and the like, a refrigerating apparatus and the like using the pipe fitting.

### BACKGROUND ART

Conventionally, a pipe fitting structured so as to insert a pipe into a joint hole of a fitting body and screw a nut thereonto and thereby joint the pipe to the joint hole of the fitting body has been known as a pipe fitting used for joining of a pipe through which fluid is made to flow into a refrigerant pipe and the like, of a refrigerating apparatus. As the pipe fitting as described above, a flareless fitting as disclosed by Patent Document 1 has been frequently adopted, and this flareless fitting is structured so that, when a nut is screwed onto a fitting body, a sleeve is interposed between the fitting body and the nut, and the sleeve is made to bite into the outer periphery of the pipe by screwing and joint the pipe and fitting body to thereby ensure the sealing performance of the joint portion.

Fig. 11 shows the flareless fitting disclosed in the prior art of Patent Document 1. This flareless fitting is constructed by a fitting body 101, a nut 102, and a sleeve 103 provided between the fitting body 101 and the nut 102. When the pipe 104 is joined to the fitting body 101, the sleeve 103 is mounted on the outer circumferential surface 104a of the pipe 104, the front end portion 104b of the pipe 104 is inserted into a joint hole 101a of the fitting body 101, and the thread portion 102a of the nut 102 is screwed onto the thread portion 101b of the fitting body 101. Then, the rear end face 103a of the sleeve 103 receives pressing force from the pressing face 102b of the nut 102, and the front end portion 103b of the sleeve 103 receives pressing force from the tapered face 101c of the fitting body 101. Therefore, the front end portion 103b of the sleeve 103 bites into the outer circumferential surface 104a of the pipe 104, and the pipe 104 is jointed to the joint hole 101a of the fitting body 101. As described above, the flareless fitting is constructed so as to join the pipe 104 and the fitting body 101 by making the sleeve 103 bite into the pipe 104 and ensure the sealing performance of the joint portion. Patent Document 1: Japanese Laid-Open Patent Publication No. 2003-74768

### DISCLOSURE OF THE INVENTION

### PROBLEMS TO BE SOLVED BY THE INVENTION

Meanwhile, the pipe fitting as described above is constructed by the fitting body, the nut, and the sleeve, and thus there is a risk that the sleeve as a relatively small part may be lost until a pipe is joined. Moreover, when a pipe is joined, the sleeve as a small part is assembled thereto, so that there is a problem that workability is low. Moreover, with respect to the sleeve, the site receiving pressing force and the site biting into the pipe are exposed, and thus when the sleeve is stocked as a spare or the sleeve is handled, these sites are liable to scratching, which may adversely affect the sealing performance of the joint portion of the pipe fitting.

The present invention has been made in view of such actual circumstances, and an objective thereof is to provide a pipe fitting in which loss of a sleeve is prevented, and the sealing performance of a joint portion is ensured while enhancing the workability at the time of connecting pipes, and a refrigerating apparatus and the like using the pipe fitting.

### MEANS FOR SOLVING THE PROBLEMS

A pipe fitting according to the present invention includes: a fitting body having a joint hole to which a pipe is joined; a fastening member fastened to the fitting body; and a sleeve provided integrally with the fastening member before the fastening member is fastened to the fitting body, and by fastening of the fastening member to the fitting body in a state where a pipe is inserted into the joint hole, cut off from the fastening member and bites into the outer periphery of the pipe. The pipe fitting is characterized in that the sleeve includes a contact surface that contacts the fitting body at the time of biting into the pipe to hermetically seal a contact portion thereof, and has a deformation inducing shape that deforms the contact surface so that a contact area of the contact portion is increased at the time of biting into the pipe.

According to this construction, the sleeve that bites into the outer periphery of the pipe by fastening of the fastening member to the fitting body is provided integrally with the fastening member before the fastening member is fastened to the fitting body. Therefore, as compared with the conventional case where the sleeve is constructed as a separate body from the fastening member, the sleeve is prevented from being lost until the pipe is joined, and therefore, it is unnecessary to stock the sleeve as a spare. Furthermore, it is unnecessary to assemble the sleeve when the pipe is joined, and thus the workability at the time of connecting the pipes is enhanced. Furthermore, since the sleeve is provided integrally with the fastening member, this provides a construction so as to suppress a biting portion and the like, of the sleeve from being exposed to the surface. It is thus made difficult to scratch the biting portion and the like, when the part is handled. Since the sleeve is cut off from the fastening member by the fastening of the fastening member to the fitting body, the separated sleeve bites into the outer periphery of the pipe, and the pipe can be jointed to the joint hole of the fitting body while ensuring the sealing performance of the joint portion. The manner of biting of the sleeve into the outer periphery of the pipe includes both a state where the biting portion of the sleeve intrudes into the thickness of the pipe and a state where the biting portion of the sleeve does not intrude into the thickness of the pipe but deforms the pipe radially inward.

Also, in the pipe fitting as described above, in order to ensure the sealing performance of the joint portion between the pipe and the fitting body, the boundary between the sleeve and the pipe is hermetically sealed by biting of the sleeve into the pipe, and the boundary between the sleeve and the fitting body is hermetically sealed by abutting of the sleeve against the fitting body. More specifically, at the boundary between the pipe and the fitting body, a hermetically sealed structure is maintained with the sleeve. Meanwhile, with the sleeve being provided integrally with the fastening member, the sleeve and fitting body may be scratched when the sleeve is cut off by fastening of the fastening member. In such a case, when the contact portion to hermetically seal the boundary between the sleeve and fitting body is scratched, the sealing performance of the joint portion between the pipe and the fitting body may decline.

In this respect, according to this construction, the sleeve has a deformation inducing shape to deform the connection portion so that the contact area of a contact portion between the contact surface of the sleeve and the fitting body is increased when the sleeve bites into the pipe. Thus even when the sleeve and the fitting body are scratched, the hermetical sealing performance of the contact portion is ensured by increasing the contact area of the contact portion. This provides a construction so as to ensure the sealing performance of the joint portion between the pipe and the fitting body as much as possible. Moreover, since the contact surface is easily deformed by the deformation inducing shape, the fastening force of the fastening member is reduced, so that the workability at the time of connecting the pipe is enhanced.

Moreover, the contact surface and a contacted surface of the fitting body that contacts the contact surface may be formed as conical surfaces having the same axial center as that of the pipe, so that a tilt angle of the contact surface becomes smaller than a tilt angle of the contacted surface.

According to this construction, the contact surface of the sleeve and a contacted surface of the fitting body that abuts against the contact surface are formed as conical surfaces having the same axial center as that of the pipe, and the tilt angle of the contact surface is smaller than the tilt angle of the contacted surface, and thus by abutting of the contact surface against the contacted surface by fastening of the fastening member, the contact surface is easily deformed toward the pipe. Therefore, the biting amount of the sleeve into the pipe is increased, so that the hermetical sealing performance between the sleeve and the pipe is enhanced. Thereby, the sealing performance of the joint portion between the pipe and the fitting body is further enhanced. Moreover, since the contacted surface of the fitting body is formed in a conical surface, this provided such a construction that the sleeve is gradually deformed toward the pipe in accordance with a movement of the fastening member in the fastening direction. Therefore, the fastening force of the fastening member is prevented from being excessively large so that the fastening member is reliably fastened, and the sleeve is made to reliably bite into the outer periphery of the pipe.

Moreover, the deformation inducing shape may be at least one recessed shape provided at an inner circumferential surface of the sleeve that faces the pipe. According to this construction, the deformation inducing shape is at least one recessed shape provided at an inner circumferential surface of the sleeve that faces the pipe, and thus the contact surface of the sleeve is easily deformed toward the pipe by the recessed shape at the time of abutting the contact surface against the contacted surface. Therefore, deformation is induced so as to increase the tilt angle of the contact surface, so that the tilt angle of the contact surface approximates the tilt angle of the contacted surface. This increases the contact area at the contact portion between the contact surface and the contacted surface, so that the hermetical sealing performance of the contact portion is enhanced. Accordingly, the sealing performance of the joint portion between the pipe and the fitting body is further enhanced.

Moreover, in the sleeve, the contact surface may be formed on the outer periphery of one end in an axial direction, and the site biting into the pipe may be provided at a tip of the one end. According to this construction, in the sleeve, the contact surface is formed on the outer periphery of one end in an axial direction, and a site biting into the pipe is provided at a tip of the one end, and thus the deformation amount of the site biting into the pipe is large in accordance with deformation of the contact surface. This provides a construction so as to increase the biting amount of the sleeve into the pipe, and the hermetical sealing performance between the sleeve and the pipe is enhanced. Thereby, the sealing performance of the joint portion between the pipe and the fitting body is further enhanced.

Moreover, a thread portion may be formed on the fitting body, so that the fastening member is threaded to the thread portion to be fastened to the fitting body. According to this construction, the fastening member is threaded to the thread portion formed on the fitting body to be fastened to the fitting body, and thus the fitting member is reliably fastened by a screwing operation of the fastening member. This reliably deforms the contact surface to increase the contact area of the contact portion and making the sleeve reliably bite into the outer periphery of the pipe, and thus the sealing performance of the joint portion can be enhanced.

Moreover, to the pipe fitting, a pipe in which supercritical refrigerant used under a supercritical state flows may be connected. According to this construction, even when high pressure is applied to the joint portion between the pipe fitting and the pipe because supercritical refrigerant used under the supercritical state flows into the pipe, the sealing performance is ensured for the pipe fitting at the joint portion with the pipe, so that the leakage of refrigerant at the joint portion is suitably prevented.

Moreover, to the pipe fitting, a pipe in which carbon dioxide refrigerant flows may be connected. According to this construction, the fluid flowing in the pipe to be connected is carbon dioxide refrigerant, and thus a pipe circuit using the pipe fitting is constructed in consideration of the global environment. Furthermore, even when carbon dioxide refrigerant is used under the supercritical state and thus high pressure is applied to the joint portion between the pipe fitting and the pipe, the sealing performance is ensured for the pipe fitting at the joint portion with the pipe, so that leakage of the refrigerant at the joint portion can be suitably prevented.

Moreover, to the pipe fitting, a pipe in which hydrocarbon refrigerant flows may be connected. According to this construction, the fluid flowing in the pipe to be connected is hydrocarbon refrigerant such as propane, isobutene or the like, and thus the pipe circuit using the pipe fitting can be constructed in consideration of the global environment. Furthermore, the sealing performance is ensured for the pipe fitting at the joint portion with the pipe, and thus leakage of highly flammable hydrocarbon refrigerant from the joint portion is suitably prevented.

Moreover, a refrigerating apparatus according to the present invention uses the pipe fitting as a connection portion of a refrigerant pipe. According to this construction, the refrigerating apparatus uses the pipe fitting as a connection portion of a refrigerant pipe, and is thus provided as a refrigerating apparatus in which loss of a sleeve is prevented, and the sealing performance of a joint portion is ensured while enhancing the workability at the time of connecting pipes.

Moreover, a heat pump water heater according to the present invention uses the pipe fitting as a connection portion of a refrigerant pipe. According to this construction, the heat pump water heater uses the pipe fitting as a connection portion of a refrigerant pipe, and is thus provided as a heat pump water heater in which loss of a sleeve is prevented, and the sealing performance of a joint portion is ensured while enhancing the workability at the time of connecting pipes.

Moreover, a water supply pipe according to the present invention uses the pipe fitting as a connection portion of a pipe. According to this construction, the water supply pipe uses the pipe fitting as a connection portion of a refrigerant pipe, and is thus provided as a water supply pipe in which loss of a sleeve is prevented, and the sealing performance of a joint portion is ensured while enhancing the workability at the time of connecting pipes.

### EFFECTS OF THE INVENTION

According to a pipe fitting of the present invention, a sleeve is provided integrally with a fastening member before the fastening member is fastened to a fitting body, and the sleeve is cut off from the fastening member by fastening of the fastening member, and thus loss of the sleeve before a pipe is connected is prevented, and the workability at the time of connecting pipes is enhanced. Moreover, since the sleeve has a deformation inducing shape that deforms a contact surface so that the contact area of a contact portion between the contact surface of the sleeve and the fitting body is increased at the time of biting of the sleeve into the pipe, the hermetical sealing performance of the contact portion is enhanced, and the sealing performance of the joint portion is ensured.

### BEST MODE FOR CARRYING OUT THE INVENTION

### (First Embodiment)

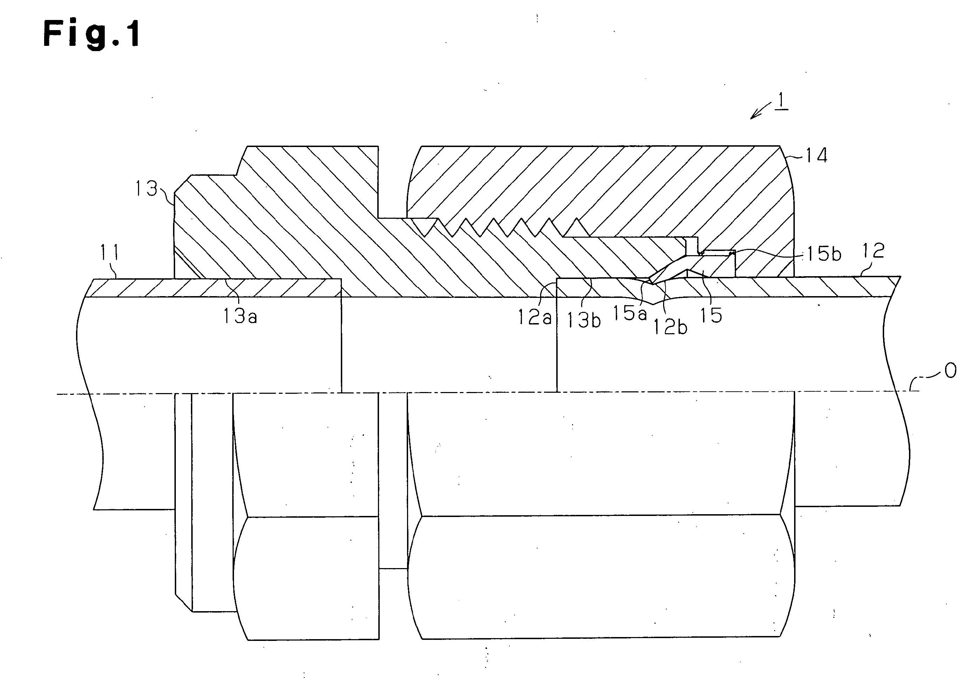

Hereinafter, a first embodiment of a pipe fitting according to the present invention will be described with reference to Figs. 1 to 6.

Fig. 1 is a partial cross-sectional view showing the construction of a pipe fitting. The pipe fitting 1 connects pipes 11 and 12, and it has a fitting body 13 into which the pipes 11 and 12 are inserted, a nut 14 as a fastening member threaded to the fitting body 13, and a sleeve 15 which is interposed between the fitting body 13 and the nut 14 at the time of connecting pipes. The pipe 11 is fixed by brazing and the like to a socket portion 13a formed at one end of the fitting body 13, and a front end portion 12a of the pipe 12 to be jointed to the fitting body 13 is inserted into a joint hole 13b provided at the other end. A front end portion 15a of the sleeve 15 bites into an outer circumferential surface 12b of the pipe 12 by screwing of the nut 14 onto the fitting body 13, whereby the pipe 12 inserted into the fitting body 13 is joined to the fitting body 13. Also, reference character O denotes an axial center of the pipes 11 and 12, the fitting body 13, the nut 14, and the sleeve 15.

The sleeve 15 biting into the pipe 12 is formed integrally with the nut 14 through a connecting portion 15b before the nut 14 is screwed onto the fitting body 13, and is constructed so as to be cut off and separated from the nut 14 by screwing of the nut 14 onto the fitting body 13 in a state where the pip 12 is inserted into the joint hole 13b. The thus constructed pipe fitting 1 will be hereafter described in detail.

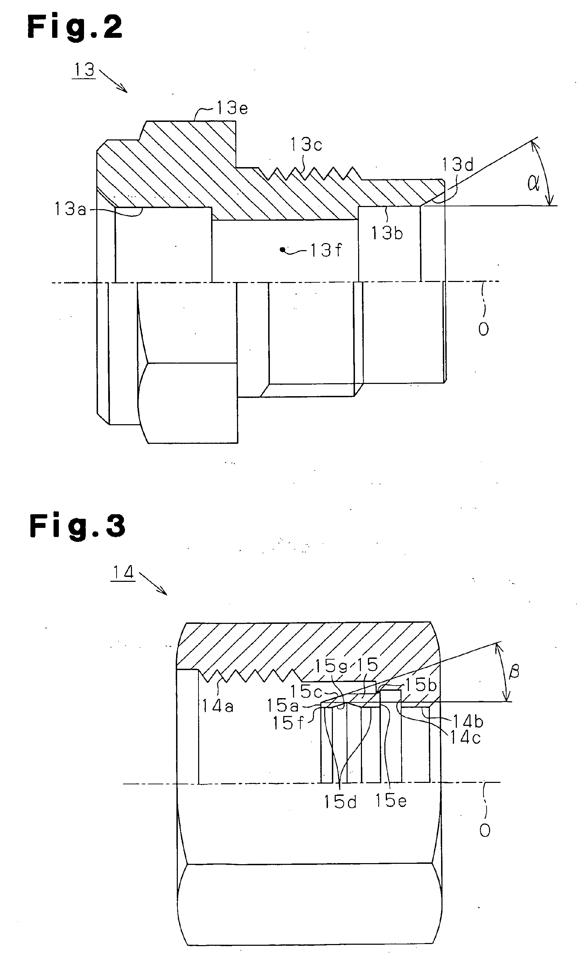

Fig. 2 is a partial cross-sectional view of the fitting body 13. The fitting body 13 has the socket portion 13a to which the pipe 11 is fixed, the joint hole 13b into which the pipe 12 is inserted, an external thread portion 13c to which the nut 14 is threaded, a guide surface 13d serving as a contacted surface that abuts against the sleeve 15 when the sleeve 15 bites into the pipe 12, and a nut portion 13e formed on the outer periphery.

The socket portion 13a is formed in a cylindrical shape, and has an inner diameter which is substantially equal to the outer diameter of the pipe 11 to be fixed. The joint hole 13b is formed in a cylindrical shape, and has an inner diameter which is substantially equal to the outer diameter of the pipe 12 to be inserted. The socket portion 13a and the joint hole 13b intercommunicate with each other via an inner space 13f. The external thread portion 13c has a threaded shape to be threaded to the nut 14, formed at an outer peripheral side of the joint hole 13b and the inner space 13f. The guide surface 13d is located at an inlet of the joint hole 13b, and formed in a conical surface having the same axial center as the axial center O and whose inner diameter increases toward the inlet. This conical surface guides while pressing the sleeve 15 when the nut 14 is screwed, so that the sleeve 15 bites into the outer circumferential surface 12b of the pipe 12. The nut portion 13e is provided so as to hold the fitting body 13 when the nut 14 is screwed.

Fig. 3 is a partial cross-sectional view of the nut 14. The nut 14 has an internal thread portion 14a to be threaded to the external thread portion 13c of the fitting body 13 and a holding hole 14b for holding the outer periphery of the pipe 12, and is integrally formed with the sleeve 15. The internal thread portion 14a is formed at the inner circumferential surface on an insertion side which is screwed onto the fitting body 13. The holding hole 14b is formed in a cylindrical shape, and has an inner diameter which is substantially equal to the outer diameter of the pipe 12 to be held. The sleeve 15 is processed integrally with the nut 14, and formed at a position on a side opposite the insertion side of and radially inward of the internal thread portion 14a.

The sleeve 15 has a front end portion 15a biting into the outer circumferential surface 12b of the pipe 12 at the time of connecting the pipe 12, a connecting portion 15b with the nut 14 that is cut off by screwing of the nut 14, and a contact surface 15c that abuts against the guide surface 13d of the fitting body 13 and guides the front end portion 15a so as to bite into the pipe 12. In addition, the sleeve 15 has an inner circumferential surface 15d that faces the pipe 12 and a rear end face 15e that receives pressing force from the nut 14 when the front end portion 15a bites into the pipe 12.

The front end portion 15a is provided at the tip in the screwing direction of the nut 14, that is, at the tip of one end in the axial direction of the sleeve 15. A tip 15f of the front end portion 15a is formed in a sharp-edge shape, so that the tip 15f reliably bites into the outer circumferential surface 12b of the pipe 12. The connecting portion 15b is provided on the outer periphery of the other end in the axial direction of the sleeve 15. The connecting portion 15b is formed so as to be thin in the axial direction as shown in Fig. 3, so that the sleeve 15 is easily cut off from the nut 14.

The contact surface 15c is located on the outer periphery of one end in the axial direction of the sleeve 15, and is formed in a conical surface having the same axial center as the axial center O and whose outer diameter increases toward the other end. A tilt angle β of the conical surface in the contact surface 15c is formed so as to be smaller than a tilt angle α of the conical surface in the guide surface 13d of the fitting body 13. Accordingly, when the nut 14 is screwed, the front end portion 15a of the sleeve 15 is guided radially inward and deformed to bite into the outer circumferential surface 12b of the pipe 12. The tilt angle α of the guide surface 13d of the fitting body 13 is preferably set in a range from 15° to 30° to smoothly guide the front end portion 15a of the sleeve 15, and more preferably set in a range from 20° to 25°.

The rear end face 15e is an end face of the other end in the axial direction of the sleeve 15, formed substantially in the vertical direction with respect to the axial center O, and confronted almost parallel to an inner surface 14c of the holding hole 14b of the nut 14. The rear end face 15e receives pressing force from the inner surface 14c after the sleeve 15 is separated from the nut 14, and makes the front end portion 15a bite into the outer circumferential surface 12b of the pipe 12.

The inner circumferential surface 15d is formed in a cylindrical shape, and has an inner diameter which is substantially equal to the outer diameter of the pipe 12. In the inner circumferential surface 15d, a recess portion 15g having a recessed shape serving as a deformation inducing shape is formed. By this recess portion 15g, when the sleeve 15 bites into the pipe 12, a contact area of a contact portion between the contact surface 15c of the sleeve 15 and the guide surface 13d of the fitting body 13 is increased. In the following, the influence of the recess portion 15g on the pipe fitting 1 will be described.

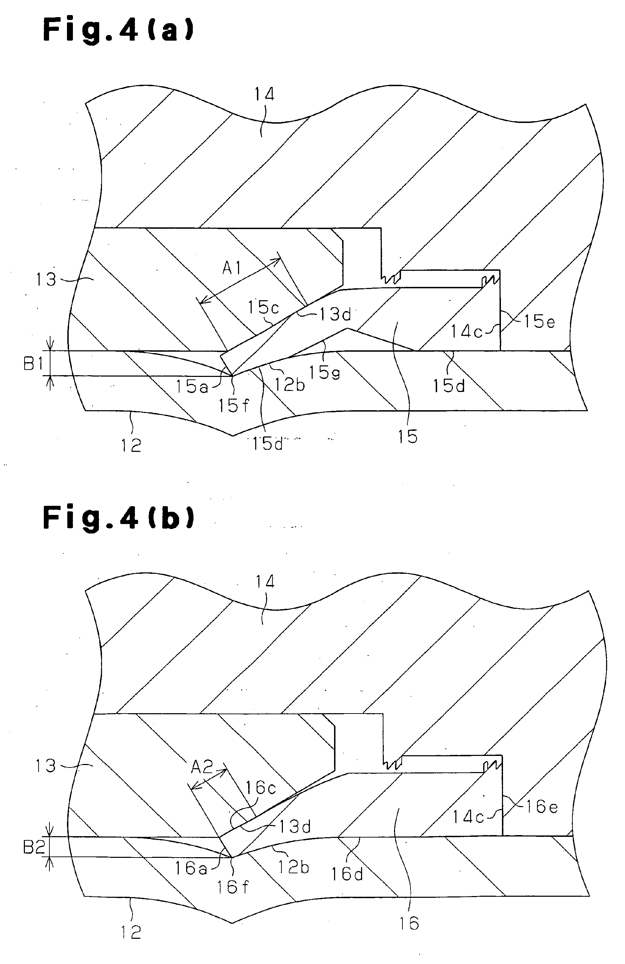

Fig. 4 is a cross-sectional view of a state when the sleeve 15 bites into the pipe 12. As shown in Fig. 4(a), when the sleeve 15 bites into the pipe 12, the contact surface 15c abuts against the guide surface 13d, and the rear end face 15e receives pressing force from the inner surface 14c of the nut 14. At this time, since the contact surface 15c has been constructed so as to be easily deformed by the recess portion 15g of the inner circumferential surface 15d toward the pipe 12, the contact surface 15c is deformed so that the tilt angle thereof approximates the tilt angle of the guide surface 13d. Accordingly, a contact area A1 of a contact portion between the contact surface 15c and the guide surface 13d is increased, and a biting amount B1 of the tip 15f of the front end portion 15a into the outer circumferential surface 12b of the pipe 12 is increased.

A state where a sleeve 16 without the recess portion 15g being formed in the inner circumferential surface bites into the pipe 12 is shown in Fig. 4(b). When the sleeve 16 bites into the pipe 12, a contact surface 16c abuts against the guide surface 13d, and a rear end face 16e receives pressing force from the inner surface 14c of the nut 14. At this time, since no recess portion exists on an inner circumferential surface 16d, the contact surface 16c has a small deformation amount in comparison with that in the case of Fig. 4(a). Therefore, it can be understood that when no recess portion is formed in the inner circumferential surface, a contact area A2 of a contact portion of the contact surface 16c is smaller than the contact area A1, and a biting amount B2 of a tip 16f of a front end portion 16a is smaller than the biting amount B1.

In the pipe fitting 1, in order to ensure the sealing performance of the joint portion between the pipe 12 and the fitting body 13, the boundary between the sleeve 15 and the pipe 12 is hermetically sealed by biting of the front end portion 15a into the outer circumferential surface 12b, and the boundary between the sleeve 15 and the fitting body 13 is hermetically sealed by abutting of the contact surface 15c against the guide surface 13d. More specifically, at the boundary between the pipe 12 and the fitting body 13, a hermetically sealed structure is maintained with the sleeve 15.

In the present embodiment, as shown in Fig. 4(a), the contact area A1 of the contact portion is increased, and thus the boundary between the contact surface 15c and the guide surface 13d is reliably hermetically sealed. Moreover, the biting amount B1 of the tip 15f of the front end portion 15a is increased, and thus the boundary between the front end portion 15a and the outer circumferential surface 12b is reliably hermetically sealed. Thus, when the sleeve 15 bites into the pipe 12, by inducing deformation of the contact surface 15c by the recess portion 15g, the sealing performance of the joint portion between the pipe 12 and the fitting body 13 is suitably enhanced.

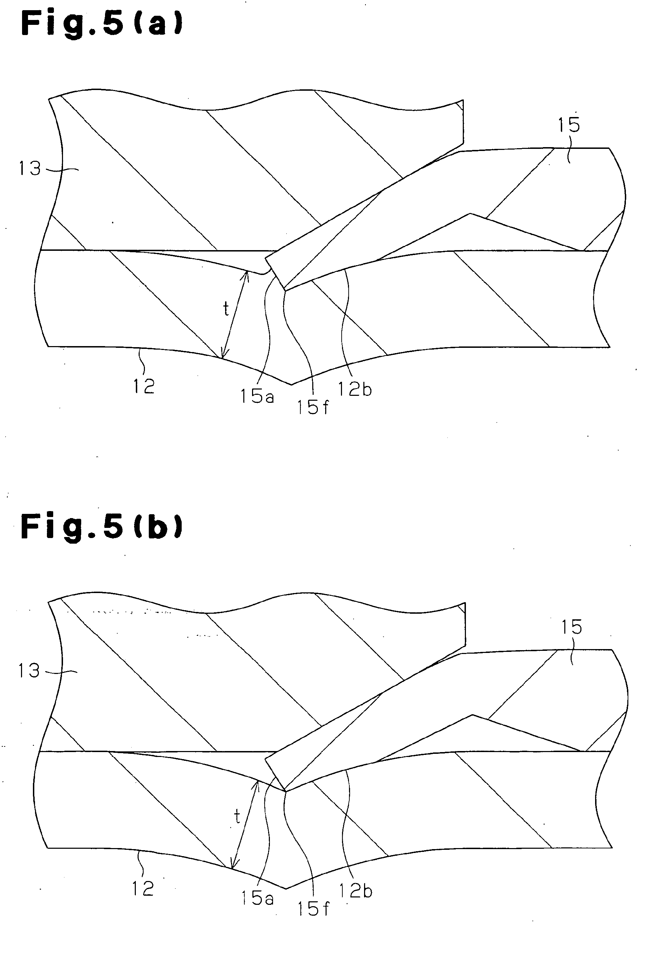

Also, the manner in which the tip 15f of the sleeve 15 bites into the outer circumferential surface 12b of the pipe 12 may be either such a manner, as shown in Fig. 5(a), that the tip 15f intrudes into a thickness "t" of the pipe 12 or such a manner, as shown in Fig. 5(b), that the tip 15f does not intrude into a thickness "t" of the pipe 12 but deforms the pipe 12 radially inward. Although in which manner the sleeve 15 bites thereinto also depends on the hardness and surface condition of the sleeve 15 and the pipe 12, in either manner, by increasing the contact area A1 and the biting amount B1, the sealing performance of the joint portion between the pipe 12 and the fitting body 13 can be enhanced.

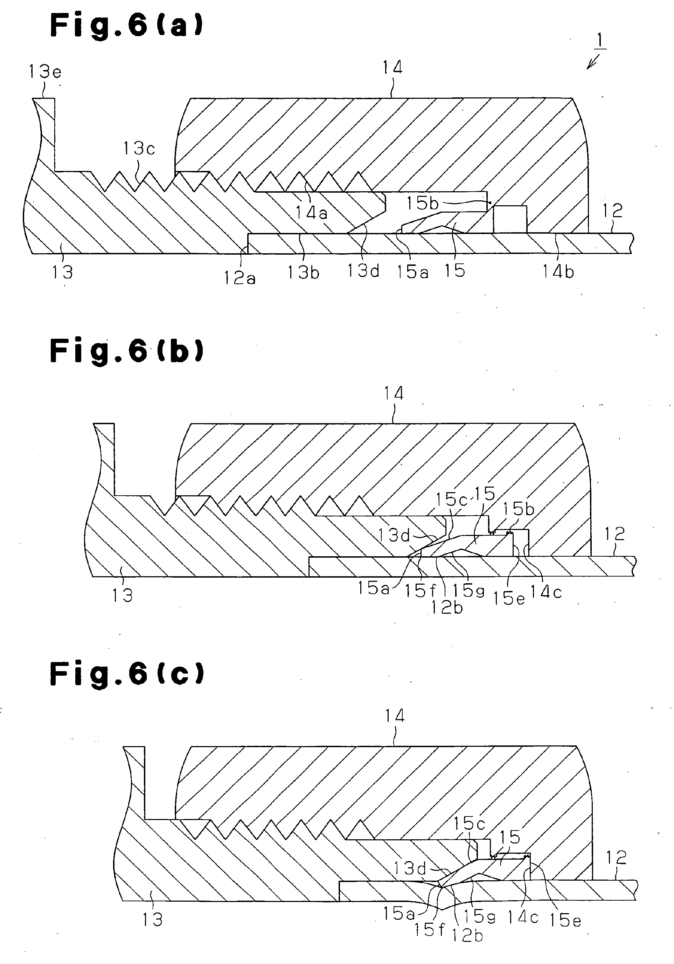

Next, a pipe connecting method for joining the pipe 12 to the fitting body 13 by using the pipe fitting 1 will be described. Figs. 6 are cross-sectional views showing the operation of a surrounding portion of the sleeve 15 of the pipe fitting 1. When the pipe 12 is joined to the fitting body 13, the pipe 12 is first passed through the holding hole 14b of the nut 14 to insert the front end portion 12a of the pipe 12 into the joint hole 13b of the fitting body 13. Then, while the nut portion 13e of the fitting body 13 is held, the internal thread portion 14a of the nut 14 is screwed onto the external thread portion 13c of the fitting body 13, as shown in Fig. 6(a).

When the nut 14 is screwed, the guide surface 13d of the fitting body 13 abuts against the front end portion 15a of the sleeve 15, and the pressing force is increased in accordance with the screwing of the nut 14. Accordingly, at the connecting portion 15b of the sleeve 15, shearing force applied in the screwing direction of the nut 14 is increased, and the connecting portion 15b of the sleeve 15 is cut off. The nut 14 and the sleeve 15 are then separated from each other, as shown in Fig. 6(b).

When the nut 14 is continuously screwed, it reaches a state where the guide surface 13d of the fitting body 13 abuts against the front end portion 15a of the sleeve 15, and the inner surface 14c of the nut 14 abuts against the rear end face 15e of the sleeve 15. Then, in accordance with the screwing of the nut 14, the rear end face 15e of the sleeve 15 receives pressing force from the inner surface 14c of the nut 14, the contact surface 15c of the sleeve 15 abuts against the guide surface 13d of the fitting body 13, and deformation of the contact surface 15c is induced by the recess portion 15g of the sleeve 15. Since the contact surface 15c is deformed so that the tilt angle thereof approximates the tilt angle of the guide surface 13d, the contact area of the contact portion between the contact surface 15c and the guide surface 13d is increased, and the biting amount of the tip 15f of the front end portion 15a into the outer circumferential surface 12b of the pipe 12 is increased. The contact surface 15c is guided radially inward while abutting against the guide surface 13d, whereby the front end portion 15a of the sleeve 15 bites into the outer circumferential surface 12b of the pipe 12, as shown in Fig. 6(c).

As described above, the pipe fitting 1 joins the pipe 12 to the fitting body 13 by making the front end portion 15a of the sleeve 15 bite into the outer circumferential surface 12b of the pipe 12. At this time, the boundary between the front end portion 15a of the sleeve 15 and the outer circumferential surface 12b of the pipe 12 is hermetically sealed by the biting of the front end portion 15a of the sleeve 15. Moreover, the contact surface 15c of the sleeve 15 and the guide surface 13d of the fitting body 13 are brought into close contact with each other, whereby the boundary between the contact surface 15c of the sleeve 15 and the guide surface 13d of the fitting body 13 is hermetically sealed. The sealing performance between the pipe 12 and the fitting body 13 is ensured by the hermetical sealing at these places.

According to the first embodiment described above, the following advantages are obtained.
(1) In the first embodiment, the sleeve 15 biting into the outer circumferential surface 12b of the pipe 12 is formed integrally with the nut 14 before the nut 14 is screwed onto the fitting body 13. Therefore, as compared with the case where the sleeve 15 is constructed as a separate body from the nut 14, the sleeve 15 is prevented from being lost until the pipe 12 is joined, and therefore, it is unnecessary to stock the sleeve 15 as a spare. Furthermore, the sleeve 15 is formed integrally with the nut 14, and thus the work of assembling the sleeve 15 is unnecessary when the pipe 12 is joined to the fitting body 13, so that the workability at the time of connecting the pipe 12 is enhanced. The sleeve 15 is cut off from the nut 14 by the screwing of the nut 14 onto the fitting body 13, and bites into the outer circumferential surface 12b of the pipe 12, and therefore, the sleeve 15 is constructed to be easily cut off, and the pipe 12 is joined to the joint hole 13b of the fitting body 13 while ensuring the sealing performance of the joint portion.
(2) In the first embodiment, the recess portion 15g is formed in the inner circumferential surface 15d of the sleeve 15, so that, when the sleeve 15 bites into the pipe 12, the contact area of the contact portion between the contact surface 15c of the sleeve 15 and the guide surface 13d of the fitting body 13 is increased by the recess portion 15g. Therefore, in such a case that the guide surface 13d of the fitting body 13 is scratched when the sleeve 15 is cut off from the nut 14, the hermetical sealing performance of the contact portion is ensured by increasing the contact area A1 of the contact portion between the contact surface 15c and the guide surface 13d. This provides a construction so as to ensure the sealing performance of the joint portion between the pipe 12 and the fitting body 13 as much as possible.
(3) In the first embodiment, the recess portion 15g is formed in the inner circumferential surface 15d of the sleeve 15, so that, when the sleeve 15 bites into the pipe 12, the contact surface 15c is easily deformed toward the pipe 12 by the recess portion 15g. Therefore, the biting amount B1 of the tip 15f of the front end portion 15a into the outer circumferential surface 12b of the pipe 12 is increased, and thus the boundary between the front end portion 15a and the outer circumferential surface 12b is reliably hermetically sealed. This enhances the sealing performance of the joint portion between the pipe 12 and the fitting body 13.
(4) In the first embodiment, since the tilt angle of the contact surface 15c of the sleeve 15 is formed so as to be smaller than the tilt angle of the guide surface 13d of the fitting body 13, when the sleeve 15 bites into the pipe 12, by abutting of the contact surface 15c against the guide surface 13d, the contact surface 15c is easily deformed toward the pipe 12. Therefore, the biting amount B1 of the tip 15f of the front end portion 15a is increased, so that the hermetical sealing performance between the front end portion 15a and the outer circumferential surface 12b is enhanced. Moreover, since the guide surface 13d of the fitting body 13 is formed in a conical surface, this provides a construction so that the sleeve 15 is gradually deformed toward the pipe 12 in accordance with the screwing of the nut 14. Therefore, the fastening torque of the nut 14 is prevented from being excessively large so that the nut 14 is reliably screwed, and the sleeve 15 is made to reliably bite into the outer periphery of the pipe 12.
(5) In the first embodiment, since deformation of the contact surface 15c is induced by the recess portion 15g of the sleeve 15 so that the contact surface 15c is easily deformed, the fastening torque of the nut 14 is reduced. Therefore, the workability at the time of connecting the pipe 12 is enhanced.
(6) In the first embodiment, since the contact surface 15c of the sleeve 15 is formed on the outer periphery of one end in the axial direction of the sleeve 15 and the front end portion 15a which is a site biting into the pipe 12 is provided at the tip of the one end, the deformation amount of the front end portion 15a is ensured large in accordance with deformation of the contact surface 15c. Therefore, a construction is provided so as to increase the biting amount B1 of the tip 15f of the front end portion 15a, and the hermetical sealing performance between the front end portion 15a of the sleeve 15 and the outer circumferential surface 12b of the pipe 12 is enhanced.

### (Second Embodiment)

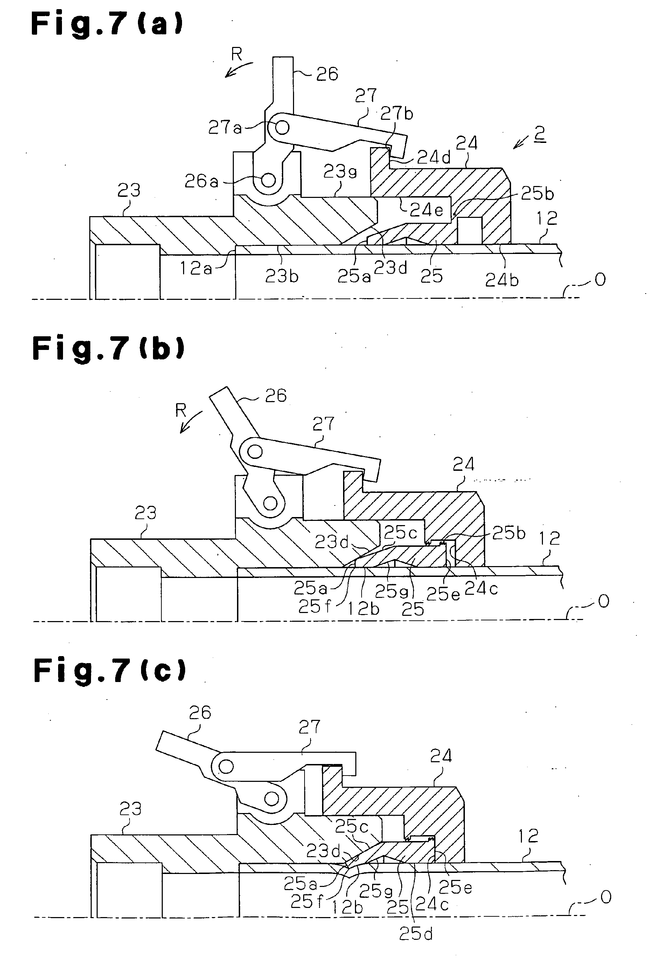

Next, a second embodiment of the pipe fitting according to the present invention will be described with reference to Figs. 7. In the first embodiment, the pipe is joined to the fitting body by the screwing of the nut onto the fitting body, while in the second embodiment, the pipe is joined to the fitting body without using any screw structure between the fitting body and the nut. The pipe fitting according to the second embodiment is constructed so as to provide the sleeve integrally with the fastening member, and cut off the sleeve from the fastening member by the sliding movement of the fastening member in the axial direction of the pipe, and make the separated sleeve bite into the outer circumferential surface of the pipe. The overlapping description of the same constructions as the first embodiment such as the construction that the sleeve bites into the outer circumferential surface of the pipe and the like, is omitted or simplified.

Figs. 7 are cross-sectional views showing the operation of a pipe fitting 2 when the pipe 12 is joined to the fitting body 23. Fig. 7(a) shows a state before the pipe 12 is connected by the pipe fitting 2. As shown in Fig. 7(a), the pipe fitting 2 has a fitting body 23 into which the pipe 12 is inserted, a fastening member 24 fastened to the fitting body 23, and a sleeve 25 biting into the outer circumferential surface of the pipe 12. The sleeve 25 is formed integrally with the fastening member 24, and the sleeve 25 and the fastening member 24 are coupled to each other through a connecting portion 25b.

An operating lever 26 is rotatably supported on the outer periphery of the fitting body 23. The pivot shaft 26a of the operating lever 26 is provided substantially in the vertical direction to the axial center O of the fitting body 23. A locking lever 27 is rotatably supported at the middle position of the operating lever 26. A pivot shaft 27a of the locking lever 27 is provided parallel to the pivot shaft 26a of the operating lever 26. Also, the operating lever 26 and the locking lever 27 thus constructed are provided at a plurality of spots on the outer periphery of the fitting body 23. A locking pawl 27b provided at the tip of the locking lever 27 is designed so as to be hooked to a flange portion 24d provided on the outer circumferential surface of the fastening member 24. Moreover, a sliding face 23g provided in a cylindrical shape on the fitting body 23 is fitted to a sliding surface 24e provided on the fastening member 24, and the fastening member 24 is designed to be movable in only the axial direction with respect to the fitting body 23.

Next, a pipe connecting method for joining the pipe 12 to the fitting body 23 by using the pipe fitting 2 will be described. When the pipe 12 is joined to the fitting body 23, the pipe 12 is first passed through the holding hole 24b of the fastening member 24 to insert the front end portion 12a of the pipe 12 into the joint hole 23b of the fitting body 23. Then, as shown in Fig. 7(a), while the locking pawl 27b of the locking lever 27 is hooked to the flange portion 24d of the fastening member 24, the operating lever 26 is rotated in the R-direction.

When the operating lever 26 is rotated in the R-direction, the fastening member 24 is moved to the fitting body 23, so that a guide surface 23d of the fitting body 23 abuts against a front end portion 25a of the sleeve 25, and the pressing force thereof increases with a movement of the fastening member 24. Accordingly, at a connecting portion 25b of the sleeve 25, the shearing force applied in the moving direction of the fastening member 24 is increased, and the connecting portion 25b of the sleeve 25 is cut off. Then, the fastening member 24 and the sleeve 25 are separated from each other, as shown in Fig. 7(b).

When the operating lever 26 is continuously rotated in the R-direction, the fastening member 24 is further moved to the fitting body 23, so that it reaches a state where the guide surface 23d of the fitting body 23 abuts against the front end portion 25a of the sleeve 25, and an inner surface 24c of the fastening member 24 abuts against a rear end face 25e of the sleeve 25. Then, in accordance with the movement of the fastening member 24, the rear end face 25e of the sleeve 25 receives pressing force from the inner surface 24c of the fastening member 24, and a contact surface 25c of the sleeve 25 abuts against the guide surface 23d of the fitting body 23, and deformation of the contact surface 25c is induced by a recess portion 25g formed on an inner circumferential surface 25d of the sleeve 25. Since the contact surface 25c is deformed so that the tilt angle thereof approximates the tilt angle of the guide surface 23d, the contact area of the contact portion between the contact surface 25c and the guide surface 23d is increased, and the biting amount of a tip 25f of the front end portion 25a into the outer circumferential surface 12b of the pipe 12 is increased. The contact surface 25c is guided radially inward while abutting against the guide surface 23d, whereby the front end portion 25a of the sleeve 25 bites into the outer circumferential surface 12b of the pipe 12 as shown in Fig. 7(c).

As described above, the pipe fitting 2 joins the pipe 12 to the fitting body 23 while ensuring the sealing performance between the pipe 12 and the fitting body 23, by making the front end portion 25a of the sleeve 25 bite into the outer circumferential surface 12b of the pipe 12.

According to the second embodiment described above, the following advantages are obtained.
(7) In the second embodiment, the fastening member 24 is fastened to the fitting body 23 by operating the operating lever 26, and the sleeve 25 provided integrally with the fastening member 24 is cut off from the fastening member 24 to bite into the outer periphery of the pipe 12, whereby the pipe 12 is joined to the fitting body 23. Therefore, even without a screw structure between the fitting body 23 and the fastening member 24, the same advantages as the advantages (1) to (6) of the first embodiment are obtained.

Also, the embodiments may be modified as follows. In the first and second embodiments, the pipe fitting 1, 2 is constructed so that the sleeve 15, 25 is integrally formed with the nut 14 or the fastening member 24. However, the sleeve 15, 25 may be jointed to the nut 14 or the fastening member 24 by a method such as adhesion, fitting, or the like.

In the first and second embodiments, the contact surface 15c, 25c of the sleeve 15, 25 is formed in a conical surface whose outer diameter increases from one end to the other end in the axial direction. However, the contact surface 15c, 25c may be formed in a shape other than the conical surface, for example, a cylindrical surface.

In the first and second embodiments, the guide surface 13d, 23d of the fitting body 13, 23 is formed in a conical surface. However, the guide surface 13d, 23d may be formed in a shape other than the conical surface, for example, a spherical surface, so long as it is a shape that can abut against the contact surface 15c, 25c to guide the same.

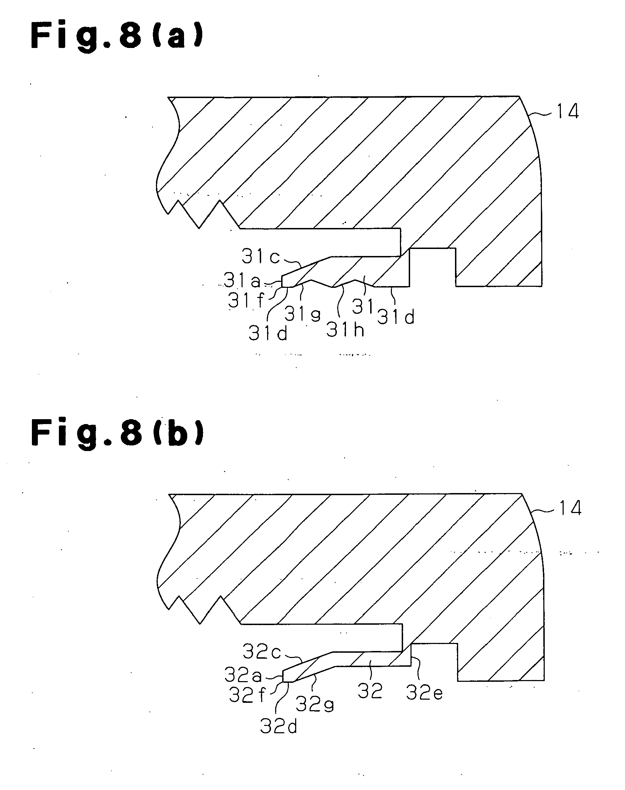

In the first and second embodiments, the recess portion 15g, 25g is formed in the inner circumferential surface 15d, 25d of the sleeve 15, 25. However, the recess 15g, 25g may have another shape, so long as it is a form to induce deformation of the contact surface 15c, 25c so that the contact area of the contact portion between the contact surface 15c, 25c and the guide surface 13d, 23d is increased. Examples of the sleeve shapes to induce deformation of the contact surfaces are shown in Figs. 8. Fig. 8(a) is an example in which two recess portions 31g and 31h are formed in an inner circumferential surface 31d of a sleeve 31. Also by thus forming the recess portions 31g and 31h, when a front end portion 31a of the sleeve 31 bites into a pipe, deformation of a contact surface 31c is induced so that the contact area of a contact portion is increased by pressing force from the nut 14. In addition, by deformation of the contact surface 31c, the biting amount of a tip 31f of the front end portion 31a into the pipe is increased. Also, three or more recess portions may be formed in the inner circumferential surface 31d. Fig. 8(b) is an example in which a recess portion 32g is provided in an inner circumferential surface 32d of a sleeve 32 in a manner extending to a rear end face 32e. Also by thus forming the relatively large recess portion 32g, when a front end portion 32a of the sleeve 32 bites into a pipe, deformation of the contact surface 32c is induced so that the contact area of a contact portion is increased by pressing force from the nut 14. In addition, by deformation of the contact surface 32c, the biting amount of a tip 32f of the front end portion 32a into the pipe is increased.

In the first and second embodiments, the front end portion 15a, 25a provided at the tip in the axial direction of the sleeve 15, 25 bites into the outer circumferential surface 12b of the pipe 12 at the time of joining the pipe 12. However, a site other than the tip of the sleeve 15, 25 may bite into the outer circumferential surface 12b of the pipe 12.

In the first and second embodiments, the contact surface 15c, 25c of the sleeve 15, 25 is located on the outer periphery of one end in the axial direction of the sleeve 15, 25. However, the contact surface 15c, 25c may be constructed so as to be located on the outer periphery of a middle portion or the other end in the axial direction. Alternatively, the contact surface 15c, 25c may be constructed so as to be formed on the end face of the tip in the axial direction of the sleeve 15, 25.

In the first and second embodiments, the type of fluid flowing through the pipe 12 is not particularly limited. However, a pipe through which supercritical refrigerant used under a supercritical state flows may be connected by the pipe fitting 1, 2 of the first and second embodiments. By this, even when high pressure is applied to the joint portion between the pipe fitting and the pipe because supercritical refrigerant used under the supercritical state flows into the pipe, the sealing performance is ensured for the pipe fitting 1, 2 at the joint portion with the pipe, so that the leakage of refrigerant at the joint portion is suitably prevented.

Furthermore, a pipe through which carbon dioxide refrigerant flows may be connected by the pipe fitting 1, 2 according to the first and second embodiments. By this, the fluid flowing in the pipe to be connected is carbon dioxide refrigerant, and thus a pipe circuit using the pipe fitting 1, 2 is constructed in consideration of the global environment. Furthermore, even when carbon dioxide refrigerant is used under the supercritical state and thus high pressure is applied to the joint portion between the pipe fitting and the pipe, the sealing performance is ensured for the pipe fitting 1, 2 at the joint portion with the pipe, so that leakage of the refrigerant at the joint portion is suitably prevented.

Furthermore, a pipe through which hydrocarbon refrigerant flows may be connected by the pipe fitting 1, 2 of the first and second embodiments. By this, the fluid flowing in the pipe to be connected is hydrocarbon refrigerant such as propane, isobutene or the like, and thus the pipe circuit using the pipe fitting 1, 2 is constructed in consideration of the global environment. Furthermore, the sealing performance is ensured for the pipe fitting 1, 2 at the joint portion with the pipe, and thus leakage of highly flammable hydrocarbon refrigerant from the joint portion is suitably prevented.

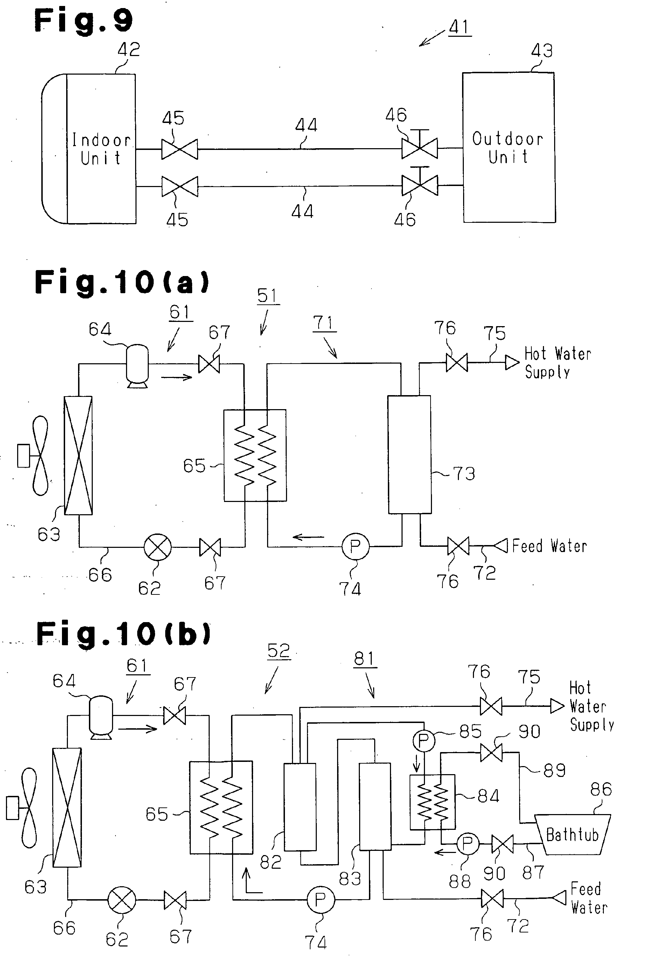

In the first and second embodiments, the pipe 11 and the pipe 12 are connected to each other by the pipe fitting 1, 2. However, these constructions of the pipe fitting 1, 2 may be applied to connection portions 45, 46 of refrigerant pipes 44 through which an indoor unit 42 and an outdoor unit 43 of an air conditioner 41 as shown in Fig. 9 interconnect with each other. By this, the air conditioner 41 uses the pipe fitting 1, 2 having the advantages mentioned above, and thus is provided as an air conditioner 41 in which loss of a sleeve is prevented, and the sealing performance of joint portions of the refrigerant pipes 44 is ensured while enhancing the workability at the time of connecting the refrigerant pipes 44. Moreover, the construction of the pipe fitting 1, 2 may be applied not only to the connection portion of a closing valve as disposed in the connection portion 46, but also to the connection portion of a refrigerant pipe in a refrigerating apparatus other than the air conditioner 41. In such a closing valve and refrigerating apparatus as well, the same advantages as those when the pipe fitting 1, 2 is applied to the connection portions 45, 46 of the air conditioner 41 are obtained.

The construction of the pipe fitting of the first and second embodiments may be applied to the connection portion of the pipe of a heat pump water heater. Figs. 10 are schematic diagrams showing connection states of pipes of the heat pump water heater. Fig. 10(a) shows a schematic diagram of a heat pump water heater 51 constructed by one tank. The heat pump water heater 51 has a heat pump unit 61 for moving heat from the outside air, and a hot water storage unit 71 for supplying hot water by using the heat pumped up by the heat pump unit 61. The heat pump unit 61 includes a refrigeration cycle apparatus having an expansion valve 62, an air heat exchanger 63, a compressor 64, and a water heat exchanger 65, and refrigerant flows in the refrigerant pipe 66 to which each equipment is connected. The hot water storage unit 71 is constructed so that water supplied to a tank 73 via a water supply pipe 72 is circulated between the tank 73 and the water heat exchanger 65 by a pump 74, and hot water, which has been subjected to heat exchange in the water heat exchanger 65, is supplied from the tank 73 via the water supply pipe 75. Fig. 10(b) shows a schematic diagram of a heat pump water heater 52 constructed by two tanks. The heat pump water heater 52 has the same construction as that of the heat pump water heater 51. However, the tank of the hot water storage unit 81 is constructed by connecting the first tank 82 and the second tank 83 in series. The heat pump water heater 52 has an additional heating function such that hot water stored in the first tank 82 and a second tank 83 is circulated between the first and second tanks 82, 83 and an additional heating heat exchanger 84 by a pump 85, and hot water sent by means of a pump 88 from a tub 86 via a water supply pipe 87 is subjected to heat exchange and warmed by the additional heating heat exchanger 84, and then returned to the tub 86 via the water supply pipe 89. In the heat pump water heater 51, 52 as described above, the pipe fitting 1, 2 may be used for the connection portion 67 provided to the refrigerant pipe 66 and the connection portion 76 provided to the water supply pipes 72, 75, for example. In addition, in the heat pump water heater 52, the pipe fitting 1, 2 can be used for the connection portion 90 provided to the water supply pipe 87, 89. By this, the heat pump water heater 51, 52 uses the pipe fitting 1, 2 having the advantages as mentioned above, and can thus be provided as a heat pump water heater 51, 52 in which loss of a sleeve is prevented, and the sealing performance of a joint portion is ensured while enhancing the workability at the time of connecting pipes. Also, the connection portion 67, 76, 90 may be provided at another position in accordance with the construction of the equipment and the units constituting the heat pump water heater. Thus, in addition to the connection portion of the refrigerant pipe, the pipe fitting 1, 2 is applied to the connection portion of the water supply pipe in which water flows.

### BRIEF DESCRIPTION OF THE DRAWINGS

Fig. 1 is a partial cross-sectional view showing the construction of a pipe fitting of a first embodiment;
Fig. 2 is a partial cross-sectional view of a fitting body of the first embodiment;
Fig. 3 is a partial cross-sectional view of a nut of the first embodiment;
Fig. 4(a) is a cross-sectional view showing a state of the sleeve biting into a pipe;
Fig. 4(b) is a cross-sectional view showing a state of the sleeve biting into a pipe according to a comparative example;
Figs. 5(a) and 5(b) are cross-sectional views showing a manner of biting of the tip of a sleeve;
Fig. 6(a) is a cross-sectional view showing a state' before a sleeve is cut off;
Fig. 6(b) is a cross-sectional view showing a state after the sleeve is cut off;
Fig. 6(c) is a cross-sectional view showing a state when the sleeve bites into a pipe;
Fig. 7(a) is a cross-sectional view showing a state before a sleeve is cut off;
Fig. 7(b) is a cross-sectional view showing a state after the sleeve is cut off;
Fig. 7(c) is a cross-sectional view showing a state when the sleeve bites into a pipe, of a pipe fitting of the second embodiment;
Figs. 8(a) and (b) are cross-sectional views showing the shapes of sleeves according to other embodiments of the present invention;
Fig. 9 is a schematic diagram showing a connection state of refrigerant pipes between an indoor unit and an outdoor unit of an air conditioner;
Fig. 10(a) is a schematic diagram showing a connection state of pipes of a heat pump water heater;
Fig. 10(b) is a schematic diagram showing a connection state of pipes of a heat pump water heater according to another example; and

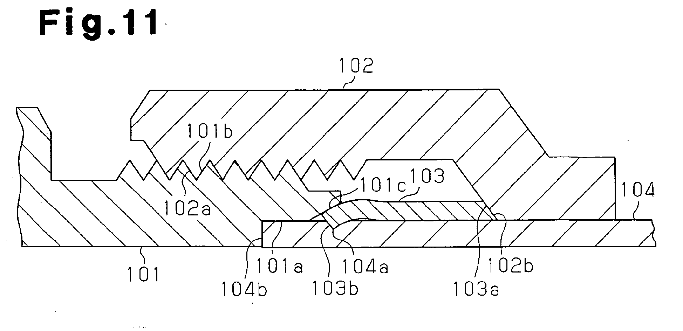

Fig. 11 is a cross-sectional view showing the construction of a pipe fitting according to a prior art.

### DESCRIPTION OF THE REFERENCE NUMERALS

1, 2 ... pipe fitting, 11, 12 ... pipe, 13, 23 ... fitting body, 14, 24 ... nut, 15, 25, 31, 32 ... sleeve, 41 ... air conditioner, 51, 52 ... heat pump water heater.

## Claims

1. A pipe fitting comprising:
a fitting body having a joint hole to which a pipe is joined;
a fastening member fastened to the fitting body; and
a sleeve provided integrally with the fastening member before the fastening member is fastened to the fitting body, wherein, by fastening of the fastening member to the fitting body in a state where a pipe is inserted into the joint hole, the sleeve is cut off from the fastening member and bites into the outer periphery of the pipe,
the pipe fitting being **characterized in that** the sleeve includes a contact surface that contacts the fitting body at the time of biting into the pipe to hermetically seal a contact portion thereof, and has a deformation inducing shape that deforms the contact surface so that a contact area of the contact portion is increased at the time of biting into the pipe.

2. The pipe fitting according to claim 1, **characterized in that** the contact surface and a contacted surface of the fitting body that contacts the contact surface are formed as conical surfaces having the same axial center as that of the pipe, and a tilt angle of the contact surface is smaller than a tilt angle of the contacted surface.

3. The pipe fitting according to claim 2, **characterized in that** the deformation inducing shape is at least one recessed shape provided at an inner circumferential surface of the sleeve that faces the pipe.

4. The pipe fitting according to claim 1, **characterized in that,** in the sleeve, the contact surface is formed on the outer periphery of one end in an axial direction, and a site biting into the pipe is provided at a tip on the one end.

5. The pipe fitting according to claim 1, **characterized in that** a thread portion is formed on the fitting body, and the fastening member is threaded to the thread portion to be fastened to the fitting body.

6. The pipe fitting according to claim 1, **characterized by** connecting a pipe in which supercritical refrigerant used under a supercritical state flows.

7. The pipe fitting according to any one of claims 1 to 5, **characterized by** connecting a pipe in which carbon dioxide refrigerant flows.

8. The pipe fitting according to any one of claims 1 to 5, **characterized by** connecting a pipe in which hydrocarbon refrigerant flows.

9. A refrigerating apparatus **characterized by** using the pipe fitting according to any one of claims 1 to 5 as a connection portion of a refrigerant pipe.

10. A heat pump water heater **characterized by** using the pipe fitting according to any one of claims 1 to 5 as a connection portion of a refrigerant pipe.

11. A water supply pipe **characterized by** using the pipe fitting according to any one of claims 1 to 5 as a connection portion.
